# FASCICULE DE BREVET EUROPEEN

(11) **EP 3 542 689 B1**
(45) Date de publication et mention de la délivrance du brevet: **13.05.2026**
(21) Numéro de dépôt: 19161735.6
(22) Date de dépôt: 08.03.2019
(51) Int. Cl.: A47J 43/07

(54) **ACCESSOIRE BATTEUR POUR UN APPAREIL ÉLECTROMÉNAGER DE PRÉPARATION CULINAIRE, EQUIPÉ DE FOUET(S) FACILEMENT DÉMONTABLE(S)**
ZUBEHÖR FÜR EIN KÜCHENGERÄT, DAS MIT EINFACH ZU DEMONTIEREN MISCHWERKZEUGEN AUSGESTATTET IST
STIRRING ACCESSORY FOR A KITCHEN APPLIANCE EQUIPPED WITH EASILY DISMANTLABLE MIXING TOOLS

(30) Priorité: 23.03.2018 FR 1852565
(43) Date de publication de la demande: 25.09.2019
(73) Titulaire: SEB S.A., 69130 Ecully (FR)
(72) Inventeur: CERCLIER, Philippe, 53440 ARON (FR); FERRON, Jean-Baptiste, 53000 LAVAL (FR); VITEL, Arnaud, 53240 ANDOUILLE (FR)
(74) Mandataire: SEB Développement

(56) Documents cités:
- WO-A1-2017/089828
- WO-A1-86/03112
- WO-A2-2011/080646
- CN-U- 202 277 265
- DE-B- 1 196 164
- DE-U1- 202009 006 852
- GB-A- 2 519 805

## Description

### Domaine technique

La présente invention concerne le domaine des appareils électroménagers de préparation culinaire et porte tout particulièrement sur un accessoire batteur utilisé sur un tel appareil pour permettre le brassage et l'émulsion des ingrédients composant la préparation culinaire, lesdits ingrédients étant versés dans un récipient dans lequel est disposé l'accessoire batteur.

L'invention vise à concevoir un accessoire batteur facilement démontable et nettoyable.

### Etat de la technique

Un appareil électroménager de préparation culinaire comprend traditionnellement un corps qui réceptionne un récipient se présentant par exemple sous la forme d'un bol. Un moteur est agencé à l'intérieur du corps et entraîne en rotation un arbre d'entraînement. Cet arbre d'entraînement vient soit se loger en saillie dans le fond du récipient positionné sur ce corps, soit s'accoupler à un arbre de transmission disposé en saillie dans le fond du récipient.

Un tel appareil électroménager comprend généralement plusieurs accessoires conçus chacun pour remplir une fonction et pour venir se loger dans le fond du récipient, en prise avec l'arbre d'entrainement ou avec l'arbre de transmission, la rotation de ce dernier permettant celle de l'accessoire.

Parmi ces accessoires, l'un d'entre eux consiste en un accessoire batteur, conçu pour permettre le brassage et l'émulsion des ingrédients versés dans le récipient afin d'obtenir une préparation culinaire, par exemple une pâte à gâteau, une meringue, etc.

Il est connu les titres suivants divulguant diverses mises en oeuvre d'un accessoire batteur présentant certaines caractéristiques comparables à celles objets de l'invention : US2072691 ; GB667863 ; FR2282932A1 ; FR2773698B1 ; EP2326226B1 ; WO201180646A2 ; CN202277265U. L'accessoire batteur comprend une pièce d'entraînement munie d'un premier axe de rotation et un ou deux fouets montés libre en rotation sur la pièce d'entraînement selon un ou deux seconds axes de rotation excentrés par rapport au premier axe de rotation, grâce à des moyens de rotation agencés entre la pièce d'entraînement et le ou les fouets. Chaque fouet comprend des brins, voire des pales. L'excentration de l'axe secondaire du fouet et le frottement des brins avec les ingrédients durant la rotation de la pièce d'entraînement selon le premier axe de rotation permet audit fouet d'entrer en rotation selon le second axe de rotation, créant ainsi une trajectoire épicycloïdale des brins. Cette trajectoire implique une diminution des projections et une meilleure incorporation d'air durant le brassage des ingrédients.

Parmi ces titres précités, il est prévu dans la demande de brevet WO201180646A2 de permettre le démontage des deux fouets vis-à-vis de la pièce d'entraînement, afin de faciliter le nettoyage de l'accessoire batteur. Selon WO201180646A2, la pièce d'entraînement comprend un corps s'étendant selon le premier axe de rotation, une traverse inférieure et une traverse supérieure, les traverses s'étendant radialement de part et d'autre du corps. Chaque fouet est monté en liaison pivot entre la traverse inférieure et la traverse supérieure. La traverse inférieure est indémontable du corps, tandis que la traverse supérieure peut être dégagée du corps par un mouvement de translation selon le premier axe de rotation, ledit dégagement de la traverse supérieure permettant ensuite d'extraire les fouets.

D'autres accessoires batteurs sont divulgués dans CN202 277 265 U et WO 2017/089828 A1.

### Résumé de l'invention

La présente invention a pour objectif de mettre en œuvre une alternative d'accessoire batteur facilitant le démontage et le remontage du ou des fouets vis-à-vis de la pièce d'entraînement.

A cet effet, l'invention concerne un accessoire batteur pour un appareil électroménager de préparation culinaire tel que défini dans la revendication 1 ou dans la revendication 3.

Cet accessoire batteur comprend une pièce d'entraînement munie d'un premier axe de rotation et un fouet monté libre en rotation sur la pièce d'entraînement selon un second axe de rotation excentré par rapport au premier axe de rotation. Ce montage libre en rotation est mis en œuvre grâce à des moyens de rotation agencés entre la pièce d'entraînement et le fouet, la pièce d'entraînement comprenant un arbre s'étendant selon le second axe de rotation, le fouet comprenant un moyeu monté libre en rotation sur l'arbre, l'accessoire batteur présentant un dispositif de maintien configuré pour bloquer en translation, selon le second axe de rotation, le moyeu monté libre en rotation sur l'arbre, au moins lorsque le moyeu tourne selon un premier sens de rotation. Ce montage du moyeu sur l'arbre permet la mise en œuvre des moyens de rotation entre le fouet et la pièce d'entraînement

Le dispositif de maintien est configuré pour autoriser le retrait du fouet de l'arbre, et inversement la mise en place du fouet sur l'arbre, lorsque le fouet est manipulé d'une manière définie par rapport à l'arbre.

Ainsi, au moins dans un premier sens de rotation le dispositif de maintien permet de bloquer la translation du moyeu engagé sur l'arbre, seule la rotation restant possible. Le montage du fouet sur la pièce d'entraînement est réalisé simplement en engageant le moyeu sur l'arbre, la mise en place du dispositif de maintien entre le moyeu et l'arbre suffisant à bloquer la translation entre ces deux éléments. Le démontage du fouet de la pièce d'entraînement, et inversement le montage du fouet sur la pièce d'entraînement, n'est rendu possible qu'en manipulant d'une manière définie ledit fouet par rapport à l'arbre.

Ainsi, dans une première réalisation de l'invention, l'accessoire batteur peut comprendre un seul fouet et la pièce d'entraînement peut comprendre un seul arbre agencé selon un second axe de rotation, le moyeu du fouet étant engagé sur cet arbre et bloqué en translation selon le second axe grâce au dispositif de maintien.

Selon une seconde réalisation, l'accessoire batteur comprend un autre fouet monté libre en rotation sur la pièce d'entraînement selon un autre second axe de rotation excentré par rapport au premier axe de rotation. En outre, la pièce d'entraînement comprend un autre arbre s'étendant selon l'autre second axe de rotation. L'autre fouet comprend un autre moyeu monté sur l'autre arbre. En outre, un autre dispositif de maintien est configuré pour bloquer en translation, selon l'autre second axe de rotation, l'autre moyeu monté libre en rotation sur l'autre arbre, au moins lorsque l'autre moyeu tourne selon un premier sens de rotation, et pour autoriser le retrait de l'autre fouet de l'autre arbre, et inversement la mise en place de l'autre fouet sur l'autre arbre, lorsque l'autre fouet est manipulé d'une manière définie par rapport à l'autre arbre.

Ainsi, selon cette seconde réalisation, l'accessoire batteur comprend deux fouets (le fouet et l'autre fouet) comprenant chacun un moyeu, les deux fouets étant montés libres en rotation sur la pièce d'entraînement respectivement selon deux seconds axes de rotation distincts. En outre, la pièce d'entraînement comprend deux arbres fixes s'étendant respectivement selon les deux seconds axes de rotation. Les moyeux des fouets sont respectivement montés sur les arbres et bloqués en translation selon les seconds axes grâce à deux dispositifs de maintien.

De préférence, selon cette seconde réalisation de l'accessoire batteur, le fouet et l'autre fouet sont disposés symétriquement l'un par rapport à l'autre, vis-à-vis du premier axe de rotation. On pourrait envisager une autre variante selon laquelle deux fouets seraient montés sur la pièce d'entraînement, chacun d'un côté vis-à-vis du premier axe de rotation, les deux seconds axes de rotation n'étant pas équidistants du premier axe de rotation. On pourrait aussi envisager une autre variante selon laquelle plusieurs fouets seraient montés sur la pièce d'entraînement, à distance et autour du premier axe de rotation. On pourrait aussi envisager une autre variante avec un seul fouet monté libre en rotation sur un seul bras de la pièce d'entraînement selon un second axe de rotation.

Selon l'accessoire batteur objet de l'invention, la pièce d'entraînement comprend un corps agencé selon le premier axe de rotation et un bras s'étendant radialement vis-à-vis du corps, l'arbre s'étendant vers le haut sur le bras. Si désiré la pièce d'entraînement peut comprendre au moins un autre bras. Le ou un autre arbre s'étend alors sur le ou chaque autre bras. En la présence d'un seul fouet, un seul bras est prévu. En présence de deux fouets, deux bras sont disposés radialement vis-à-vis du corps et en opposition l'un par rapport à l'autre, deux arbres s'étendant vers le haut respectivement sur les deux bras. Selon la taille du récipient de travail utilisé, jusqu'à huit fouets pourraient être répartis autour du premier axe de rotation. Des réalisations comportant deux ou trois fouets sont toutefois préférées pour des questions de coût, d'efficacité de fonctionnement, et de simplicité de manipulation.

Selon une première variante de conception de la pièce d'entraînement, l'arbre est rapporté sur le bras ; si désiré le ou chaque autre arbre est rapporté sur le ou l'un des autres bras. On peut toutefois envisager une seconde variante de conception de la pièce d'entraînement selon laquelle l'arbre, le corps et le bras, si désiré le ou les autre(s) arbre(s) et le ou les autre(s) bras sont formés d'un élément monobloc.

Selon une conception de la pièce d'entraînement, le bras comprend un racloir. Ce racloir permet de décoller les ingrédients présents dans le fond du récipient. Si désiré le ou au moins l'un des autre(s) bras peut comprendre un racloir.

Selon une conception de la pièce d'entraînement, le corps comprend une forme en cloche creuse s'étendant vers le haut selon le premier axe de rotation. Cette forme permet de saisir facilement l'accessoire batteur positionné dans le récipient.

Selon une conception de la pièce d'entraînement, le corps comprend des moyens d'accouplement. Les moyens d'accouplement peuvent notamment être formés par des dents.

Selon une première conception du dispositif de maintien, celui-ci comprend :
- un élément de butée agencé sur la pièce d'entraînement pour bloquer la translation du moyeu dans un premier sens selon le second axe de rotation,
- une gorge agencée sur l'arbre,
- une gorge interne agencée sur le moyeu,
- et une rondelle élastique s'engageant dans la gorge et formant un élément de blocage de la translation du moyeu dans un second sens selon ce second axe de rotation, une fois en position dans la gorge interne.

Ainsi l'utilisateur peut dégager le fouet de la pièce d'entraînement en exerçant une traction selon la direction du second axe de rotation vers l'extrémité libre de l'arbre, et mettre en place le fouet sur la pièce d'entraînement avec un mouvement en sens inverse.

Selon une seconde conception du dispositif de maintien, celui-ci comprend :
- une tête et une gorge agencées sur l'arbre, la gorge étant positionnée sous la tête, ladite tête comprenant au moins une rainure hélicoïdale débouchant d'un côté sur la gorge et de l'autre sur une extrémité supérieure de l'arbre,
- au moins un plot agencé à l'intérieur du moyeu et configuré pour pénétrer dans ladite au moins une rainure hélicoïdale et venir se loger dans la gorge lors de la mise en place du moyeu sur l'arbre.

Ainsi l'utilisateur peut dégager le fouet de la pièce d'entraînement en engageant le ou les plots dans la ou les rainures hélicoïdales, selon le premier sens de rotation ; lorsque le fouet est tourné dans le second sens de rotation opposé au premier sens de rotation le fouet ne peut être dégagé de la pièce d'entraînement.

De préférence, selon cette seconde conception du dispositif de maintien, celui-ci comprend deux rainures hélicoïdales et deux plots, les plots s'engageant respectivement dans les rainures hélicoïdales pour venir se loger dans la gorge.

Ainsi, selon cette seconde conception du dispositif de maintien, seule une position particulière du moyeu vis-à-vis de l'arbre permet de monter ou de démonter le fouet de la pièce d'entraînement.

Selon une conception de l'accessoire batteur, le fouet comprend des brins répartis autour du moyeu. Des variantes de conception sont envisageables en remplaçant les brins sur le fouet par des pales ou des ailettes. Si désiré le ou l'un au moins des autres fouets peut comprendre des brins répartis autour de l'autre moyeu.

Selon une conception de l'accessoire batteur, dans une configuration selon laquelle la pièce d'entraînement comprend un corps et un bras, tel que précité, le moyeu comprend une base au moins partiellement annulaire munie de moyens de mélange évoluant au-dessus et à distance du bras recevant ledit moyeu, lors de la rotation dudit moyeu, pour favoriser le brassage et l'émulsion de faibles quantités de préparations alimentaires. Cela permet d'optimiser le travail du fouet avec des petites proportions de préparations alimentaires. On entend par faibles quantités de préparations alimentaires, des quantités de préparations alimentaires qui ne dépassent pas le cinquième de la hauteur du fouet lorsque l'accessoire batteur est en position dans le récipient. Si désiré, le ou les autres bras et le ou les autres moyeux peuvent présenter une configuration similaire.

Selon une conception des moyens de mélange, ceux-ci sont constitués d'ondulations réparties autour et/ou en-dessous de la base.

L'invention concerne également un appareil électroménager de préparation culinaire, lequel comprend un récipient muni d'un dispositif d'entraînement en rotation et un accessoire batteur présentant l'une et/ou l'autre des caractéristiques précitées. L'accessoire batteur est apte à être logé dans le récipient et accouplé avec le dispositif d'entraînement en rotation, selon le premier axe de rotation.

L'invention concerne également un appareil électroménager de préparation culinaire comprenant un dispositif d'entraînement en rotation, un récipient de travail et un accessoire batteur apte à être entraîné en rotation dans le récipient de travail par le dispositif d'entraînement en rotation, du fait que l'accessoire batteur est conforme à l'une au moins des caractéristiques précitées et que l'accessoire batteur est apte à être entraîné en rotation dans le récipient de travail par le dispositif d'entraînement en rotation selon le premier axe de rotation.

### Brève description des figures

La description suivante met en évidence les caractéristiques et avantages de la présente invention. Cette description s'appuie sur des figures, parmi lesquelles :
- La figure 1 illustre une vue d'ensemble d'un accessoire batteur selon un premier mode de conception ;
- La figure 2 illustre une vue de face, en coupe, de l'accessoire batteur de la figure 1 ;
- Les figures 3 et 4 illustrent une conception du fouet selon ce premier mode de conception de l'accessoire batteur ;
- Les figures 5 et 6 illustrent une conception de la pièce d'entraînement selon ce premier mode de conception de l'accessoire batteur ;
- La figure 7 illustre en coupe le fouet positionné sur l'arbre de la pièce d'entraînement, selon ce premier mode de conception de l'accessoire batteur ;
- La figure 8 met en évidence des moyens d'accouplement sur la pièce d'entraînement ;
- La figure 9 met en évidence une base munie de moyens de mélange, sur le fouet ;
- La figure 10 illustre une vue d'ensemble d'un accessoire batteur selon un second mode de conception ;
- La figure 11 illustre une vue en coupe de face de l'accessoire batteur de la figure 10 ;
- La figure 12 met en évidence la présence d'une rondelle élastique sur une gorge d'un arbre de la pièce d'entraînement selon le second mode de conception ;
- La figure 13 illustre la pièce d'entraînement selon ce second mode de conception de l'accessoire batteur ;
- La figure 14 illustre en coupe le fouet selon ce second mode de conception de l'accessoire batteur.

### Description détaillée

Dans la suite de la description, les mêmes références sont utilisées pour désigner les mêmes caractéristiques selon les diverses variantes de réalisation, sauf indication. En outre, le terme appareil est utilisé pour désigner un appareil électroménager de préparation culinaire qui est équipé d'un accessoire batteur selon l'invention.

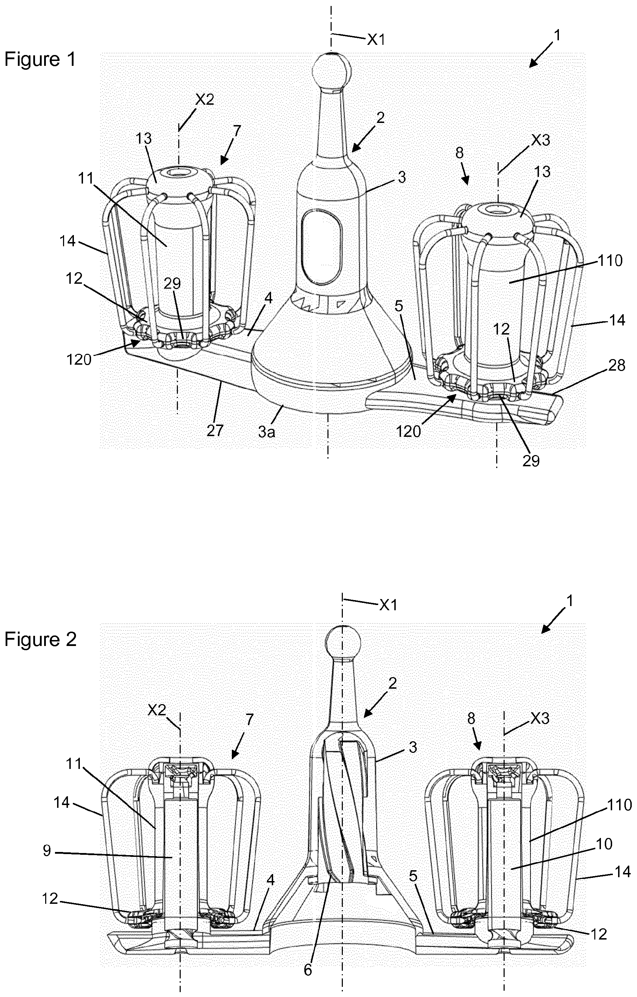

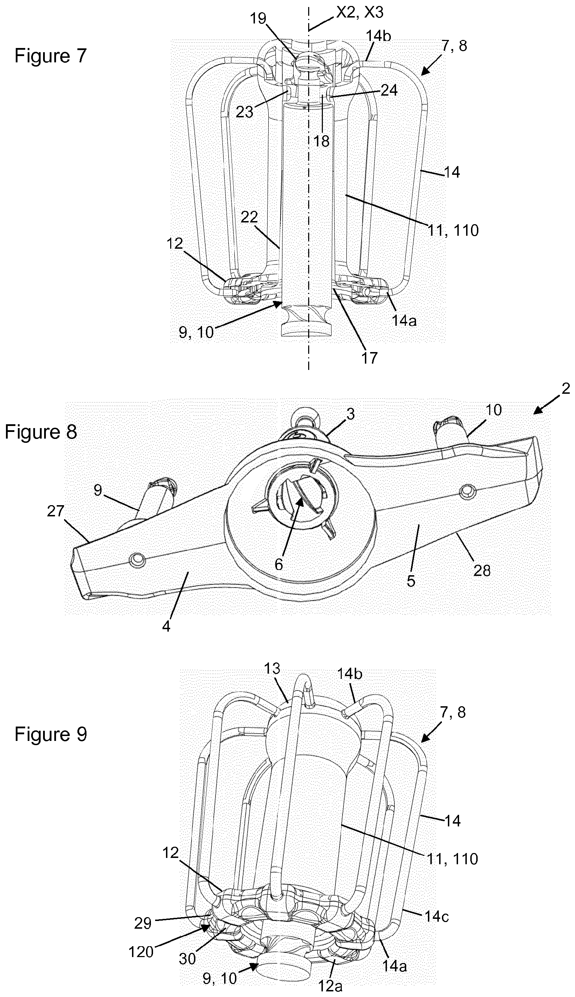

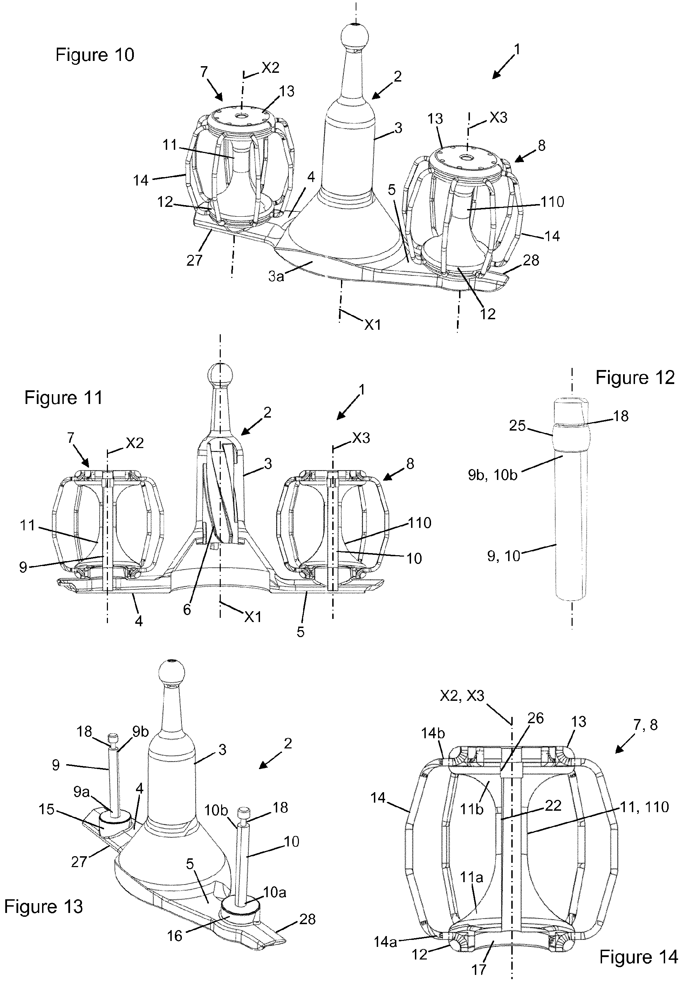

Sur les deux variantes illustrées en figures 1 et 10, l'accessoire batteur 1 comprend une pièce d'entraînement 2 qui comporte un corps 3 présentant plus ou moins une forme de cloche creuse, ce corps 3 étant disposé selon un premier axe X1. La pièce d'entraînement est entraînée en rotation selon ce premier axe X1. La pièce d'entraînement 2 comporte également un bras 4 et un autre bras 5 qui prolongent radialement le corps 3 dans sa partie inférieure 3a, le bras 4 et l'autre bras 5 étant disposés symétriquement l'un par rapport à l'autre, vis-à-vis du premier axe X1. Le corps 3 est creux et comprend dans sa partie interne des moyens d'accouplement formés par des dents 6, comme l'illustrent les deux variantes de l'accessoire batteur 1 en figures 2 et 11. Ces dents 6 sont également illustrées sur la figure 8, pour la première variante de l'accessoire batteur 1.

L'accessoire batteur 1 est destiné à être placé dans un récipient d'un appareil (non illustré). Les caractéristiques d'un tel appareil sont bien connues de l'homme du métier, raison pour laquelle elles ne seront pas détaillées. L'appareil comprend traditionnellement un corps qui incorpore un dispositif d'entraînement en rotation, lequel comporte notamment un moteur entraînant en rotation un arbre d'entraînement, cet arbre d'entraînement faisant saillie en partie supérieure du corps. L'appareil comprend également un récipient, par exemple sous la forme d'un bol, lequel est apte à être engagé sur la partie supérieure du corps, position dans laquelle l'arbre d'entraînement pénètre par le fond du récipient. Cet arbre d'entraînement comprend des dents complémentaires aux dents 6 à l'intérieur du corps 3 de l'accessoire batteur 1, de sorte que l'arbre d'entraînement engrène avec la pièce d'entraînement 2 lorsque l'accessoire batteur 1 est placé dans le récipient. La rotation du moteur entraîne alors celle de la pièce d'entraînement 2 selon le premier axe X1. On peut également envisager qu'un arbre de transmission soit agencé en saillie dans le fond du récipient, cet arbre de transmission étant accouplé à l'arbre d'entraînement une fois le récipient en position sur le corps de l'appareil. Dans ce cas, l'arbre de transmission comporte lesdites dents complémentaires aux dents 6, à l'intérieur du corps 3 de l'accessoire batteur 1.

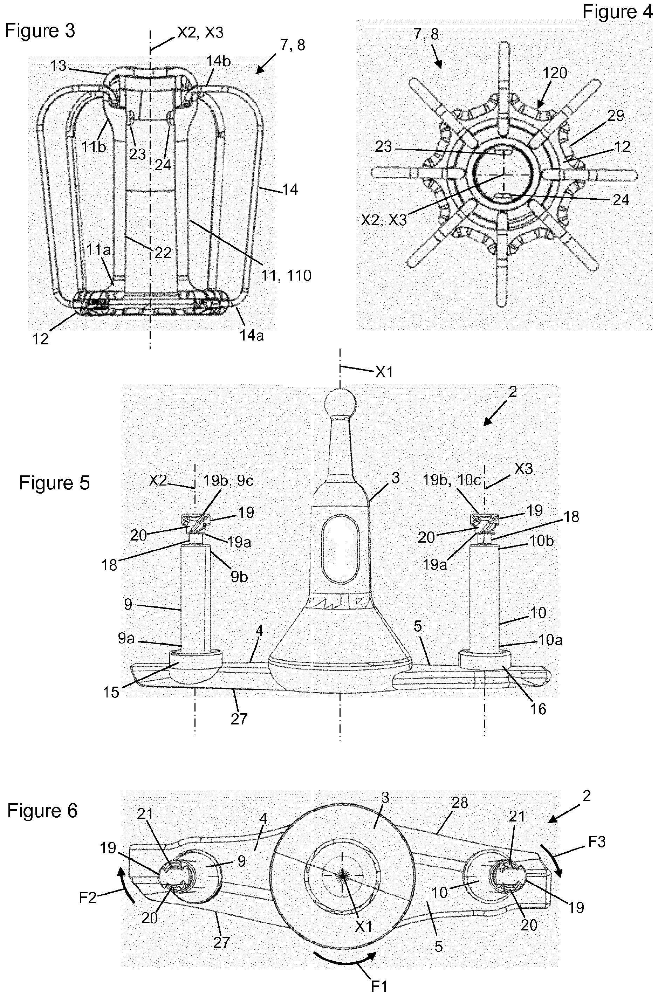

L'accessoire batteur 1 comprend également un fouet 7 et un autre fouet 8, avantageusement de conception identique, qui sont montés en rotation selon deux seconds axes X2, X3, respectivement sur le bras 4 et sur l'autre bras 5. Les seconds axes X2, X3 sont parallèles au premier axe X1 et disposés symétriquement l'un vis-à-vis de l'autre selon ce premier axe X1, comme l'illustrent les figures 1, 2, 10 et 11. La pièce d'entraînement 2 comprend un arbre 9 et un autre arbre 10 qui sont fixés respectivement sur le bras 4 et sur l'autre bras 5 et qui s'étendent vers le haut, selon les deux seconds axes X2, X3, comme l'illustrent par exemple les figures 5 et 13 pour les deux variantes de l'accessoire batteur 1. Sur la variante des figures 1 à 9, le corps 3, le bras 4 et l'autre bras 5 sont formés d'un élément monobloc, tandis que l'arbre 9 et l'autre arbre 10 sont rapportés sur le bras 4 et sur l'autre bras 5. Il en est de même sur la variante des figures 10 à 14. On peut toutefois envisager des variantes pour lesquelles le corps 3, le bras 4 et l'autre bras 5 ainsi que l'arbre 9 et l'autre arbre 10 sont formés d'un élément monobloc.

Comme l'illustrent par exemple les figures 2, 3, 11 et 14, le fouet 7 et l'autre fouet 8 comprennent chacun un moyeu 11, 110 qui est monté en rotation sur l'arbre 9 ou sur l'autre arbre 10 selon le second axe X2, X3. Le fouet 7 et l'autre fouet 8 comprennent chacun également une base 12 et une tête 13 prolongeant respectivement les extrémités inférieure 11a et supérieure 11b du moyeu 11, 110. La base 12 est partiellement annulaire et elle est disposée au-dessus et à distance du bras 4 ou de l'autre bras 5, comme le montrent notamment les figures 1 et 2. Des brins 14, par exemple au nombre de huit, sont uniformément répartis autour du moyeu 11, 110, les extrémités inférieure 14a et supérieure 14b de ces brins 14 étant respectivement assemblées avec la base 12 et avec la tête 13.

Comme l'illustrent par exemple les figures 5 et 13, deux plots cylindriques 15, 16 sont agencés respectivement sur le bras 4 ou sur l'autre bras 5, selon les seconds axes X2, X3, ces plots cylindriques 15, 16 constituant des épaulements aux extrémités inférieures 9a, 10a de l'arbre 9 et de l'autre arbre 10. Comme l'illustrent par exemple les figures 3 et 14, la base 12 du fouet 7 ou de l'autre fouet 8 comprend un logement cylindrique 17, d'un diamètre légèrement supérieur à celui des plots cylindriques 15, 16. Lorsque les moyeux 11, 110 du fouet 7 et de l'autre fouet 8 sont engagés respectivement sur l'arbre 9 et sur l'autre arbre 10, les logements cylindriques 17 réceptionnent les plots cylindriques 15, 16 et viennent en butée sur ceux-ci, ce qui limite la translation vers le bas, selon les seconds axes X2, X3, du fouet 7 et de l'autre fouet 8 vis-à-vis de la pièce d'entraînement 2. Ainsi chacun des plots cylindriques 15, 16 forme un élément de butée agencé sur la pièce d'entraînement 2 pour bloquer la translation du moyeu 11 ou de l'autre moyeu 110 dans un premier sens selon le second axe de rotation.

Sur la variante des figures 1 à 9, les parties supérieures 9b, 10b de l'arbre 9 et de l'autre arbre 10 comprennent chacune une gorge 18 formant au-dessus de celle-ci une tête 19. Chaque tête 19 comprend deux rainures hélicoïdales 20, 21 qui débouchent du côté inférieur 19a de ladite tête 19, sur la gorge 18, et du côté supérieur 19b de ladite tête 19, sur l'extrémité supérieure 9c, 10c de l'arbre 9 ou de l'autre arbre 10, comme le montrent les figures 5 et 6. Le moyeux 11, 110 du fouet 7 ou de l'autre fouet 8 comprend sur sa paroi cylindrique interne 22, au niveau de son extrémité supérieure 11b, deux plots 23, 24 disposés en vis-à-vis, comme le montrent les figures 3 et 4. Lors de la mise en place du fouet 7 ou de l'autre fouet 8 sur l'arbre 9 ou sur l'autre arbre 10, seule une position angulaire définie permet d'engager les plots 23, 24 respectivement dans les deux rainures hélicoïdales 20, 21, par le côté supérieur 19b de la tête 19. Une légère rotation du fouet 7 ou de l'autre fouet 8 permet ensuite aux plots 23, 24 de descendre dans les rainures hélicoïdales 20, 21 jusqu'à atteindre le côté inférieur 19a de la tête 19 et venir se loger dans la gorge 18, comme l'illustre la figure 7. Une fois la gorge 18 atteinte, le fouet 7 ou l'autre fouet 8 peut tourner librement autour de l'arbre 9 ou de l'autre arbre 10 selon le second axe X2, X3.

Le fouet 7 et l'autre fouet 8 sont maintenus en position sur l'arbre 9 ou l'autre arbre 10 grâce à ce dispositif de maintien précité (les plots 23, 24, les rainures hélicoïdales 20, 21 sur la tête 19 et la gorge 18), puisque seule une manipulation déterminée consistant à effectuer une traction vers le haut et une légère rotation du fouet 7 ou de l'autre fouet 8 jusqu'à ce que les plots 23, 24 correspondent avec les rainures hélicoïdales 20, 21 sur le côté inférieur 19a de la tête 19, permet de dégager le fouet 7 ou l'autre fouet 8 de l'arbre 9 ou de l'autre arbre 10. En effet, la pièce d'entraînement 2 tourne dans le sens de la flèche F1, illustrée en figure 6, qui est le sens antihoraire, ce qui tend au contraire à faire tourner le fouet 7 et l'autre fouet 8 dans les sens des flèches F2, F3, illustrées en figure 6, qui est le sens horaire, du fait de l'effort exercé par la préparation alimentaire sur le fouet 7 ou l'autre fouet 8. Les rainures hélicoïdales 20, 21 sur les têtes 19 de l'arbre 9 et de l'autre arbre 10 présentent chacune un pas à droite en regard des seconds axes X2, X3, comme le montre la figure 5 pour la rainure hélicoïdale 20. Ainsi la rotation du fouet 7 et de l'autre fouet 8, et donc des plots 23, 24 sur les moyeux 11, 110, s'effectue d'une telle manière par rapport au pas à droite des rainures hélicoïdales 20, 21, que lesdits plots 23, 24 ne peuvent pas sortir des gorges 18 sur l'arbre 9 et l'autre arbre 10, à moins d'effectuer ladite manipulation déterminée précitée. On comprend, qu'inversement, la mise en place du fouet 7 ou de l'autre fouet 8 sur l'arbre 9 ou sur l'autre arbre 10 nécessite de positionner précisément les plots 23, 24 en regard des rainures hélicoïdales 20, 21, du côté supérieur 19b de la tête 19, afin de permettre l'introduction desdits plots 23, 24 dans lesdites rainures hélicoïdales 20, 21 et leur positionnement dans la gorge 18 sous la tête 19.

Sur la variante des figures 10 à 14, les parties supérieures 9b, 10b de l'arbre 9 et l'autre arbre 10 comprennent chacune une gorge 18, comme l'illustre la figure 13. Cette gorge 18 reçoit une rondelle élastique 25, comme l'illustre la figure 12. Le moyeu 11, 110 du fouet 7 ou de l'autre fouet 8 comprend sur sa paroi cylindrique interne 22, au niveau de son extrémité supérieure 11b, une gorge interne 26. Lorsque le fouet 7 ou l'autre fouet 8 est engagé sur l'arbre 9 ou l'autre arbre 10, la rondelle élastique 25 se comprime légèrement, ce qui permet son introduction et celle de l'arbre 9 ou de l'autre arbre 10 dans le moyeu 11, 110. Une fois que la rondelle élastique 25 atteint la position de la gorge interne 26, cette rondelle élastique 25 reprend sa forme normale, ce qui bloque la translation selon le second axe X2, X3, du fouet 7 ou de l'autre fouet 8 sur l'arbre 9 ou sur l'autre arbre 10. Dans cette position, les plots cylindriques 15, 16 sont positionnés dans les logements cylindriques 17 des bases 12 des fouets 7, 8. Dans cette position, le fouet 7 ou l'autre fouet 8 sont maintenus sur la pièce d'entrainement 2. Une traction vers le haut, selon la direction du second axe X2, X3 de rotation, permet de comprimer légèrement la rondelle élastique 25 pour dégager le moyeu 11, 110 de l'arbre 9 ou de l'autre arbre 10 et extraire le fouet 7 ou l'autre fouet 8. Ainsi, seule une manipulation déterminée consistant à tirer vers le haut le fouet 7, 8 permet de dégager le moyeu 11, 110 de l'arbre 9 ou de l'autre arbre 10. Inversement, une poussée vers le bas du fouet 7 ou de l'autre fouet 8 permet d'engager le moyeu 11, 110 sur l'arbre 9 ou sur l'autre arbre 10. Ainsi le dispositif de maintien est configuré pour bloquer en translation, selon le second axe X2 de rotation, le moyeu 11 monté libre en rotation sur l'arbre 9, quel que soit le sens de rotation du moyeu 11. Il en va de même pour l'autre dispositif de maintien configuré pour bloquer en translation, selon le second axe X3 de rotation, le moyeu 110 monté libre en rotation sur l'autre arbre 10, quel que soit le sens de rotation du moyeu 110.

Comme l'illustrent par exemple les figures 5, 6, 10 et 13, le bras 4 et l'autre bras 5 comprennent des racloirs 27, 28 ayant chacun une forme de lame, ceux-ci permettant de racler le fond du récipient durant la rotation de l'accessoire batteur 1. Les racloirs 27, 28 sont disposés en amont des bases 12 des fouets 7, 8, par rapport au sens de rotation de la pièce d'entraînement 2 défini par la flèche F1 illustrée en figure 6. Ainsi, les racloirs 27, 28 raclent la préparation alimentaire dans le fond du récipient avant que ladite préparation alimentaire soit mélangée par le fouet 7 et l'autre fouet 8. On garantit ainsi que toute la préparation alimentaire est convenablement brassée par le fouet 7 et l'autre fouet 8.

Comme l'illustrent les figures 4 et 9, la base 12 du fouet 7 et de l'autre fouet 8 comprend des moyens de mélange 120 comportant des premières ondulations 29 sur la périphérie de la base 12 et des secondes ondulations 30 sur la face inférieure 12a de ladite base 12. Ces ondulations 29, 30 sur la base 12 partiellement annulaire sont disposées au-dessus et à distance du bras 4 et de l'autre bras 5. Lors de la rotation du fouet 7 et de l'autre fouet 8, ces ondulations 29, 30 assurent le mélange de la préparation alimentaire, y compris lorsqu'une faible quantité de préparation alimentaire est disposée dans le récipient de l'appareil, seule la partie inférieure 14c des brins 14 étant plongée dans la préparation alimentaire. Ces ondulations 29, 30 seront tout particulièrement efficaces lorsque la hauteur de préparation alimentaire dans le récipient n'excède pas le cinquième de la hauteur du fouet 7 et de l'autre fouet 8. On peut envisager de telles ondulations sur la base 12 du fouet 7 et de l'autre fouet 8 de la variante des figures 10 à 14. On peut aussi remplacer ces ondulations 29, 30 sur la base 12 du fouet 7 et de l'autre fouet 8 par d'autres moyens de mélange 120, par exemple des pales ou des ailettes agencées autour et/ou en-dessous de ladite base 12.

La description précédente des deux variantes de réalisation de l'accessoire batteur 1 selon l'invention met en exergue la facilité de montage et de démontage du fouet 7 et de l'autre fouet 8 sur l'arbre 9 et l'autre arbre 10 de la pièce d'entraînement 2, la présence d'un dispositif de maintien assurant le blocage en translation du fouet 7 et de l'autre fouet 8 sur l'arbre 9 et l'autre arbre 10 selon les seconds axes X2, X3.

La présence des moyens de mélange sur la base 12 du fouet 7 et de l'autre fouet 8 offre une efficacité de brassage de faibles quantités de préparations alimentaires disposées dans le récipient de l'appareil.

Bien entendu, des variantes de réalisation restent envisageables sans sortir du cadre de l'invention. On peut notamment prévoir un seul fouet 7 sur l'accessoire batteur 1. On peut aussi prévoir le fouet 7 et l'autre fouet 8 sur l'accessoire batteur 1, mais en disposant les seconds axes X2, X3 à des distances différentes vis-à-vis du premier axe X1. On peut aussi prévoir au moins un fouet additionnel sur l'accessoire batteur 1 en complément du fouet 7 et de l'autre fouet 8, avantageusement monté libre en rotation sur la pièce d'entraînement 2 selon un axe de rotation additionnel distinct, si désiré sur un bras additionnel de la pièce d'entraînement 2. On peut aussi prévoir de remplacer les brins 14 sur le fouet 7 ou le ou l'un au moins des autres fouets 8 par des pales ou des ailettes.

## Revendications

1. Accessoire batteur (1) pour un appareil électroménager de préparation culinaire, ledit accessoire batteur (1) comprenant une pièce d'entraînement (2) munie d'un premier axe (X1) de rotation et un fouet (7) monté libre en rotation sur la pièce d'entraînement (2) selon un second axe (X2) de rotation excentré par rapport au premier axe (X1) de rotation, la pièce d'entraînement (2) comprenant un arbre (9) s'étendant selon le second axe (X2) de rotation, le fouet (7) comprenant un moyeu (11) monté libre en rotation sur l'arbre (9), l'accessoire batteur (1) présentant un dispositif de maintien configuré pour bloquer en translation, selon le second axe (X2) de rotation, le moyeu (11) monté libre en rotation sur l'arbre (9), au moins lorsque le moyeu (11) tourne selon un premier sens de rotation, **caractérisé en ce que** le dispositif de maintien est configuré pour autoriser le retrait du fouet (7) de l'arbre (9), et inversement la mise en place du fouet (7) sur l'arbre (9), lorsque le fouet (7) est manipulé d'une manière définie par rapport à l'arbre (9), le dispositif de maintien comprenant une gorge (18) agencée sur l'arbre (9), le dispositif de maintien comprenant en outre :
- une tête (19) agencée sur l'arbre (9), la gorge (18) étant positionnée sous la tête (19), ladite tête (19) comprenant au moins une rainure hélicoïdale (20) débouchant d'un côté sur la gorge (18) et de l'autre sur une extrémité supérieure (9c) de l'arbre (9),
- au moins un plot (23) agencé à l'intérieur du moyeu (11) et configuré pour pénétrer dans ladite au moins une rainure hélicoïdale (20) et venir se loger dans la gorge (18) lors de la mise en place du moyeu (11) sur l'arbre (9).

2. Accessoire batteur (1) selon la revendication 1, **caractérisé en ce que** le dispositif de maintien comprend deux rainures hélicoïdales (20, 21) et deux plots (23, 24), les plots (23, 24) s'engageant respectivement dans les rainures hélicoïdales (20, 21) pour venir se loger dans la gorge (18).

3. Accessoire batteur (1) pour un appareil électroménager de préparation culinaire, ledit accessoire batteur (1) comprenant une pièce d'entraînement (2) munie d'un premier axe (X1) de rotation et un fouet (7) monté libre en rotation sur la pièce d'entraînement (2) selon un second axe (X2) de rotation excentré par rapport au premier axe (X1) de rotation, la pièce d'entraînement (2) comprenant un arbre (9) s'étendant selon le second axe (X2) de rotation, le fouet (7) comprenant un moyeu (11) monté libre en rotation sur l'arbre (9), l'accessoire batteur (1) présentant un dispositif de maintien configuré pour bloquer en translation, selon le second axe (X2) de rotation, le moyeu (11) monté libre en rotation sur l'arbre (9), au moins lorsque le moyeu (11) tourne selon un premier sens de rotation, **caractérisé en ce que** le dispositif de maintien est configuré pour autoriser le retrait du fouet (7) de l'arbre (9), et inversement la mise en place du fouet (7) sur l'arbre (9), lorsque le fouet (7) est manipulé d'une manière définie par rapport à l'arbre (9), le dispositif de maintien comprenant une gorge (18) agencée sur l'arbre (9), le dispositif de maintien comprenant en outre :
- un élément de butée agencé sur la pièce d'entraînement (2) pour bloquer la translation du moyeu (11) dans un premier sens selon le second axe (X2) de rotation,
- une gorge interne (26) agencée sur le moyeu (11),
- et une rondelle élastique (25) s'engageant dans la gorge (18) et formant un élément de blocage de la translation du moyeu (11) dans un second sens selon ce second axe (X2) de rotation, une fois en position dans la gorge interne (26).

4. Accessoire batteur (1) selon l'une des revendications 1 à 3, **caractérisé en ce qu'**il comprend un autre fouet (8) monté libre en rotation sur la pièce d'entraînement (2) selon un autre second axe (X3) de rotation excentré par rapport au premier axe (X1) de rotation, la pièce d'entraînement (2) comprenant un autre arbre (10) s'étendant selon l'autre second axe (X3) de rotation, l'autre fouet (8) comprend un autre moyeu (110) monté sur l'autre arbre (10), et **en ce qu'**un autre dispositif de maintien est configuré pour bloquer en translation, selon l'autre second axe (X3) de rotation, l'autre moyeu (110) monté libre en rotation sur l'autre arbre (10), au moins lorsque l'autre moyeu (110) tourne selon un premier sens de rotation, et pour autoriser le retrait de l'autre fouet (8) de l'autre arbre (10), et inversement la mise en place de l'autre fouet (8) sur l'autre arbre (10), lorsque l'autre fouet (8) est manipulé d'une manière définie par rapport à l'autre arbre (10).

5. Accessoire batteur (1) selon la revendication 4, **caractérisé en ce que** le fouet (7) et l'autre fouet (8) sont disposés symétriquement l'un par rapport à l'autre, vis-à-vis du premier axe (X1) de rotation.

6. Accessoire batteur (1) selon l'une des revendications 1 à 5, **caractérisé en ce que** la pièce d'entraînement (2) comprend un corps (3) agencé selon le premier axe (X1) de rotation et un bras (4) s'étendant radialement vis-à-vis du corps (3), et **en ce que** l'arbre (9) s'étend vers le haut sur le bras (4).

7. Accessoire batteur (1) selon la revendication 6, **caractérisé en ce que** l'arbre (9) est rapporté sur le bras (4).

8. Accessoire batteur (1) selon la revendication 6, **caractérisé en ce que** l'arbre (9), le corps (3) et le bras (4) sont formés d'un élément monobloc.

9. Accessoire batteur (1) selon l'une des revendications 6 à 8, **caractérisé en ce que** le bras (4) comprend un racloir (27).

10. Accessoire batteur (1) selon l'une des revendications 6 à 9, **caractérisé en ce que** le corps (3) comprend une forme en cloche creuse s'étendant vers le haut selon le premier axe (X1) de rotation.

11. Accessoire batteur (1) selon l'une des revendications 6 à 10, **caractérisé en ce que** le corps (3) comprend des moyens d'accouplement.

12. Accessoire batteur (1) selon l'une des revendications 1 à 11, **caractérisé en ce que** le fouet (7) comprend des brins (14) répartis autour du moyeu (11).

13. Accessoire batteur (1) selon l'une des revendications 6 à 12, rattachée à la revendication 6, **caractérisé en ce que** le moyeu (11) comprend une base (12) au moins partiellement annulaire munie de moyens de mélange (120) évoluant au-dessus et à distance du bras (4) recevant ledit moyeu (11), lors de la rotation dudit moyeu (11), pour favoriser le brassage et l'émulsion de faibles quantités de préparations alimentaires.

14. Accessoire batteur (1) selon la revendication 13, **caractérisé en ce que** les moyens de mélange sont constitués d'ondulations (29, 30) réparties autour et/ou en-dessous de la base (12).

15. Appareil électroménager de préparation culinaire comprenant un dispositif d'entraînement en rotation, un récipient de travail et un accessoire batteur (1) apte à être entraîné en rotation dans le récipient de travail par le dispositif d'entraînement en rotation, **caractérisé en ce que** l'accessoire batteur (1) est conforme à l'une au moins des revendications 1 à 14, et **en ce que** l'accessoire batteur (1) est apte à être entraîné en rotation dans le récipient de travail par le dispositif d'entraînement en rotation selon le premier axe (X1) de rotation.

## Patentansprüche

1. Schneebesen-Zubehör (1) für ein Küchengerät zur Zubereitung von Lebensmitteln, wobei das Schneebesen-Zubehör (1) ein Antriebsteil (2) mit einer ersten Drehachse (X1) und einen Schneebesen (7) umfasst, der frei drehbar an dem Antriebsteil (2) um eine zweite Drehachse (X2) gelagert ist, die gegenüber der ersten Drehachse (X1) versetzt ist, wobei das Antriebsteil (2) eine Welle (9) umfasst, die sich entlang der zweiten Drehachse (X2) erstreckt, wobei der Schneebesen (7) eine Nabe (11) umfasst, die frei drehbar auf der Welle (9) gelagert ist, wobei das Schneebesen-Zubehör (1) eine Halteeinrichtung aufweist, die dazu eingerichtet ist, die in Richtung der zweiten Drehachse (X2) frei drehbar auf der Welle (9) gelagerte Nabe (11) in Längsrichtung zu blockieren, zumindest wenn sich die Nabe (11) in einer ersten Drehrichtung dreht, **dadurch gekennzeichnet, dass** die Halteeinrichtung dazu eingerichtet ist, das Abnehmen des Schneebesens (7) von der Welle (9) und umgekehrt das Aufsetzen des Schneebesens (7) auf die Welle (9) zu ermöglichen, wenn der Schneebesen (7) in einer relativ zur Welle (9) definierten Weise gehandhabt wird, wobei die Halteeinrichtung eine Nut (18) umfasst, die an der Welle (9) angeordnet ist, wobei die Halteeinrichtung ferner umfasst:
• einen Kopf (19), der an der Welle (9) angeordnet ist, wobei die Nut (18) unterhalb des Kopfes (19) positioniert ist, wobei der Kopf (19) mindestens eine Schraubnut (20) umfasst, die einerseits in die Nut (18) und andererseits in ein oberes Ende (9c) der Welle (9) mündet,
• mindestens einen Zapfen (23), der im Inneren der Nabe (11) angeordnet ist und dazu eingerichtet ist, in die mindestens eine Schraubnut (20) einzudringen und sich beim Aufsetzen der Nabe (11) auf die Welle (9) in der Nut (18) einzulagern.

2. Schneebesen-Zubehör (1) nach Anspruch 1, **dadurch gekennzeichnet, dass** die Halteeinrichtung zwei Schraubnuten (20, 21) und zwei Zapfen (23, 24) umfasst, wobei die Zapfen (23, 24) sich jeweils in die Schraubnuten (20, 21) eingreifen, um sich in der Nut (18) einzulagern.

3. Schneebesen-Zubehör (1) für ein Küchengerät zur Zubereitung von Lebensmitteln, wobei das Schneebesen-Zubehör (1) ein Antriebsteil (2) mit einer ersten Drehachse (X1) und einen Schneebesen (7) umfasst, der frei drehbar an dem Antriebsteil (2) um eine zweite Drehachse (X2) gelagert ist, die gegenüber der ersten Drehachse (X1) versetzt ist, wobei das Antriebsteil (2) eine Welle (9) umfasst, die sich entlang der zweiten Drehachse (X2) erstreckt, wobei der Schneebesen (7) eine Nabe (11) umfasst, die frei drehbar auf der Welle (9) gelagert ist, wobei das Schneebesen-Zubehör (1) eine Halteeinrichtung aufweist, die dazu eingerichtet ist, die in Richtung der zweiten Drehachse (X2) frei drehbar auf der Welle (9) gelagerte Nabe (11) in Längsrichtung zu blockieren, zumindest wenn sich die Nabe (11) in einer ersten Drehrichtung dreht, **dadurch gekennzeichnet, dass** die Halteeinrichtung dazu eingerichtet ist, das Abnehmen des Schneebesens (7) von der Welle (9) und umgekehrt das Aufsetzen des Schneebesens (7) auf die Welle (9) zu ermöglichen, wenn der Schneebesen (7) in einer relativ zur Welle (9) definierten Weise gehandhabt wird, wobei die Halteeinrichtung eine Nut (18) umfasst, die an der Welle (9) angeordnet ist, wobei die Halteeinrichtung ferner umfasst:
• ein Anschlagelement, das an dem Antriebsteil (2) angeordnet ist, um die Längsbewegung der Nabe (11) in einer ersten Richtung entlang der zweiten Drehachse (X2) zu blockieren,
• eine innere Nut (26), die an der Nabe (11) angeordnet ist,
• und eine Federunterlegscheibe (25), die in die Nut (18) eingreift und, sobald sie sich in der inneren Nut (26) befindet, ein Element zur Blockierung der Längsbewegung der Nabe (11) in einer zweiten Richtung entlang dieser zweiten Drehachse (X2) bildet.

4. Schneebesen-Zubehör (1) nach einem der Ansprüche 1 bis 3, **dadurch gekennzeichnet, dass** es einen weiteren Schneebesen (8) umfasst, der frei drehbar an dem Antriebsteil (2) um eine weitere zweite Drehachse (X3) gelagert ist, die gegenüber der ersten Drehachse (X1) versetzt ist, wobei das Antriebsteil (2) eine weitere Welle (10) umfasst, die sich entlang der weiteren zweiten Drehachse (X3) erstreckt, wobei der weitere Schneebesen (8) eine weitere Nabe (110) umfasst, die auf der weiteren Welle (10) gelagert ist, und dass eine weitere Halteeinrichtung dazu eingerichtet ist, die in Richtung der weiteren zweiten Drehachse (X3) frei drehbar auf der weiteren Welle (10) gelagerte weitere Nabe (110) in Längsrichtung zu blockieren, zumindest wenn sich die weitere Nabe (110) in einer ersten Drehrichtung dreht, und das Abnehmen des weiteren Schneebesens (8) von der weiteren Welle (10) und umgekehrt das Aufsetzen des weiteren Schneebesens (8) auf die weitere Welle (10) zu ermöglichen, wenn der weitere Schneebesen (8) in einer relativ zur weiteren Welle (10) definierten Weise gehandhabt wird.

5. Schneebesen-Zubehör (1) nach Anspruch 4, **dadurch gekennzeichnet, dass** der Schneebesen (7) und der weitere Schneebesen (8) bezüglich der ersten Drehachse (X1) symmetrisch zueinander angeordnet sind.

6. Schneebesen-Zubehör (1) nach einem der Ansprüche 1 bis 5, **dadurch gekennzeichnet, dass** das Antriebsteil (2) einen entlang der ersten Drehachse (X1) angeordneten Körper (3) und einen Arm (4) umfasst, der sich radial gegenüber dem Körper (3) erstreckt, und dass sich die Welle (9) nach oben auf dem Arm (4) erstreckt.

7. Schneebesen-Zubehör (1) nach Anspruch 6, **dadurch gekennzeichnet, dass** die Welle (9) an dem Arm (4) befestigt ist.

8. Schneebesen-Zubehör (1) nach Anspruch 6, **dadurch gekennzeichnet, dass** die Welle (9), der Körper (3) und der Arm (4) aus einem einstückigen Element gebildet sind.

9. Schneebesen-Zubehör (1) nach einem der Ansprüche 6 bis 8, **dadurch gekennzeichnet, dass** der Arm (4) einen Schaber (27) umfasst.

10. Schneebesen-Zubehör (1) nach einem der Ansprüche 6 bis 9, **dadurch gekennzeichnet, dass** der Körper (3) eine sich nach oben entlang der ersten Drehachse (X1) erstreckende hohle, glockenförmige Form umfasst.

11. Schneebesen-Zubehör (1) nach einem der Ansprüche 6 bis 10, **dadurch gekennzeichnet, dass** der Körper (3) Kupplungsmittel umfasst.

12. Schneebesen-Zubehör (1) nach einem der Ansprüche 1 bis 11, **dadurch gekennzeichnet, dass** der Schneebesen (7) Drähte (14) umfasst, die um die Nabe (11) herum verteilt sind.

13. Schneebesen-Zubehör (1) nach einem der Ansprüche 6 bis 12, der Anspruch 6 untergeordnet, **dadurch gekennzeichnet, dass** die Nabe (11) eine zumindest teilweise ringförmige Basis (12) umfasst, die mit Mischmitteln (120) versehen ist, die sich bei der Drehung der genannten Nabe (11) oberhalb und in Abstand von dem Arm (4), der die genannte Nabe (11) aufnimmt, bewegen, um das Durchmischen und Emulgieren geringer Mengen von Lebensmittelzubereitungen zu fördern.

14. Schneebesen-Zubehör (1) nach Anspruch 13, **dadurch gekennzeichnet, dass** die Mischmittel durch Wellen (29, 30) gebildet sind, die um die Basis (12) herum und/oder unterhalb der Basis (12) verteilt sind.

15. Küchengerät zur Zubereitung von Lebensmitteln, umfassend eine Drehantriebseinrichtung, einen Arbeitsbehälter und ein Schneebesen-Zubehör (1), das in dem Arbeitsbehälter von der Drehantriebseinrichtung in Drehung versetzbar ist, **dadurch gekennzeichnet, dass** das Schneebesen-Zubehör (1) gemäß mindestens einem der Ansprüche 1 bis 14 ausgebildet ist und dass das Schneebesen-Zubehör (1) von der Drehantriebseinrichtung um die erste Drehachse (X1) in dem Arbeitsbehälter in Drehung versetzbar ist.

## Claims

1. Beater accessory (1) for a food preparation household appliance, said beater accessory (1) comprising a drive part (2) provided with a first axis (X1) of rotation and a whisk (7) mounted freely rotatable on the drive part (2) about a second axis (X2) of rotation offset with respect to the first axis (X1) of rotation, the drive part (2) comprising a shaft (9) extending along the second axis (X2) of rotation, the whisk (7) comprising a hub (11) mounted freely rotatable on the shaft (9), the beater accessory (1) having a retaining device configured to lock in translation, along the second axis (X2) of rotation, the hub (11) mounted freely rotatable on the shaft (9), at least when the hub (11) rotates in a first direction of rotation, **characterized in that** the retaining device is configured to allow removal of the whisk (7) from the shaft (9), and conversely fitting of the whisk (7) on the shaft (9), when the whisk (7) is handled in a defined manner relative to the shaft (9), the retaining device comprising a groove (18) arranged on the shaft (9), the retaining device further comprising:
• a head (19) arranged on the shaft (9), the groove (18) being positioned under the head (19), said head (19) comprising at least one helical groove (20) opening on one side into the groove (18) and on the other side into an upper end (9c) of the shaft (9),
• at least one stud (23) arranged inside the hub (11) and configured to penetrate into said at least one helical groove (20) and to become housed in the groove (18) when the hub (11) is fitted on the shaft (9).

2. Beater accessory (1) according to claim 1, **characterized in that** the retaining device comprises two helical grooves (20, 21) and two studs (23, 24), the studs (23, 24) respectively engaging in the helical grooves (20, 21) in order to become housed in the groove (18).

3. Beater accessory (1) for a food preparation household appliance, said beater accessory (1) comprising a drive part (2) provided with a first axis (X1) of rotation and a whisk (7) mounted freely rotatable on the drive part (2) about a second axis (X2) of rotation offset with respect to the first axis (X1) of rotation, the drive part (2) comprising a shaft (9) extending along the second axis (X2) of rotation, the whisk (7) comprising a hub (11) mounted freely rotatable on the shaft (9), the beater accessory (1) having a retaining device configured to lock in translation, along the second axis (X2) of rotation, the hub (11) mounted freely rotatable on the shaft (9), at least when the hub (11) rotates in a first direction of rotation, **characterized in that** the retaining device is configured to allow removal of the whisk (7) from the shaft (9), and conversely fitting of the whisk (7) on the shaft (9), when the whisk (7) is handled in a defined manner relative to the shaft (9), the retaining device comprising a groove (18) arranged on the shaft (9), the retaining device further comprising:
• an abutment element arranged on the drive part (2) for blocking translation of the hub (11) in a first direction along the second axis (X2) of rotation,
• an internal groove (26) arranged on the hub (11),
• and a spring washer (25) engaging in the groove (18) and forming an element for blocking translation of the hub (11) in a second direction along this second axis (X2) of rotation, once in position in the internal groove (26).

4. Beater accessory (1) according to any one of claims 1 to 3, **characterized in that** it comprises another whisk (8) mounted freely rotatable on the drive part (2) about another second axis (X3) of rotation offset with respect to the first axis (X1) of rotation, the drive part (2) comprising another shaft (10) extending along the other second axis (X3) of rotation, the other whisk (8) comprising another hub (110) mounted on the other shaft (10), and **in that** another retaining device is configured to lock in translation, along the other second axis (X3) of rotation, the other hub (110) mounted freely rotatable on the other shaft (10), at least when the other hub (110) rotates in a first direction of rotation, and to allow removal of the other whisk (8) from the other shaft (10), and conversely fitting of the other whisk (8) on the other shaft (10), when the other whisk (8) is handled in a defined manner relative to the other shaft (10).

5. Beater accessory (1) according to claim 4, **characterized in that** the whisk (7) and the other whisk (8) are arranged symmetrically with respect to each other, with respect to the first axis (X1) of rotation.

6. Beater accessory (1) according to any one of claims 1 to 5, **characterized in that** the drive part (2) comprises a body (3) arranged along the first axis (X1) of rotation and an arm (4) extending radially with respect to the body (3), and **in that** the shaft (9) extends upwards on the arm (4).

7. Beater accessory (1) according to claim 6, **characterized in that** the shaft (9) is attached on the arm (4).

8. Beater accessory (1) according to claim 6, **characterized in that** the shaft (9), the body (3) and the arm (4) are formed by a single-piece element.

9. Beater accessory (1) according to any one of claims 6 to 8, **characterized in that** the arm (4) comprises a scraper (27).

10. Beater accessory (1) according to any one of claims 6 to 9, **characterized in that** the body (3) comprises a hollow bell-shaped form extending upwards along the first axis (X1) of rotation.

11. Beater accessory (1) according to any one of claims 6 to 10, **characterized in that** the body (3) comprises coupling means.

12. Beater accessory (1) according to any one of claims 1 to 11, **characterized in that** the whisk (7) comprises strands (14) distributed around the hub (11).

13. Beater accessory (1) according to any one of claims 6 to 12, dependent on claim 6, **characterized in that** the hub (11) comprises a base (12) at least partially annular provided with mixing means (120) evolving above and at a distance from the arm (4) receiving said hub (11), during rotation of said hub (11), in order to promote stirring and emulsifying of small quantities of food preparations.

14. Beater accessory (1) according to claim 13, **characterized in that** the mixing means are formed by undulations (29, 30) distributed around and/or beneath the base (12).

15. Food preparation household appliance comprising a rotational drive device, a working bowl and a beater accessory (1) capable of being driven in rotation in the working bowl by the rotational drive device, **characterized in that** the beater accessory (1) conforms to at least one of claims 1 to 14, and **in that** the beater accessory (1) is capable of being driven in rotation in the working bowl by the rotational drive device about the first axis (X1) of rotation.
